# EUROPÄISCHE PATENTSCHRIFT

(11) **EP 2 028 212 B1**
(45) Veröffentlichungstag und Bekanntmachung des Hinweises auf die Patenterteilung: **16.11.2011**
(21) Anmeldenummer: 08162859.6
(22) Anmeldetag: 22.08.2008
(51) Int. Cl.: C08G 73/06, C08J 9/12

(54) **Cyanatbasierte, mit Kohlendioxid befüllte Strukturschäume sowie Verfahren zu deren Herstellung**
Cynate-based structure plastic filled with carbon dioxide and method for its production
Mousses structurelles à base de cyanate, remplies de dioxyde de carbone, et leur procédé de fabrication

(30) Priorität: 24.08.2007 DE 102007040103
(43) Veröffentlichungstag der Anmeldung: 25.02.2009
(73) Patentinhaber: Fraunhofer-Gesellschaft zur Förderung der angewandten Forschung e.V., 80686 München (DE)
(72) Erfinder: Bauer, Monika, 15754, Senzig (DE); Vieth, Siegfried, 03046, Cottbus (DE)
(74) Vertreter: Olgemöller, Luitgard Maria

(56) Entgegenhaltungen:
- WO-A-99/23142

## Beschreibung

Die Erfindung betrifft die Herstellung von neuartigen Strukturschäumen auf Polycyanuratharz-Basis. Die Schäume zeichnen sich durch ein besonders geringes spezifisches Gewicht, hohe Flammfestigkeit und exzellente mechanische Eigenschaften aus. Sie sind daher geeignete Materialien für Leichtbauanwendungen in der Verkehrstechnik, insbesondere im Luftfahrtbereich. Das Verfahren beruht auf der Kopplung des Härtungsprozesses mit einer chemischen Erzeugung des für das Schäumen erforderlichen Treibgases, für das vorliegend Kohlenstoffdioxid verwendet wird.

Der Forderung nach permanenter Gewichtsreduktion, Wärme- und Schalldämmung sowie verschärften Sicherheitsauflagen im Transportsektor kann mit einem verstärkten Einsatz von hochwertigen Strukturschäumen entgegengetreten werden. Neben hervorragenden mechanischen Eigenschaften müssen diese Bauteile eine hohe Brandfestigkeit aufweisen. Zu den in der zivilen Luftfahrt (Innenausstattung) gestellten Anforderungen bzgl. des Brandverhaltens gehören eine geringe Brennbarkeit, eine geringe Wärmefreisetzungsrate, niedrige Rauchgasdichte sowie geringe Toxizität der gebildeten Brandgase.

Analoge Forderungen bestehen im Schienenfahrzeugbau.

Polyurethane sind wegen ihrer Preiswürdigkeit, Variabilität und guten Verarbeitungseigenschaften das Reaktivharz-Schaummaterial mit dem breitesten Anwendungsspektrum. Für weitergehende Struktur-Anwendungen im Transportsektor sind jedoch vor allem die inhärenten Brandeigenschaften der Polyurethan-Hartschäume nicht ausreichend. Schäume auf Basis von Hochtemperatur-Thermoplasten wie PEEK und PEI finden - auch wegen ihres hohen Preises - Anwendungen in Nischen und können nur in Blöcken oder als extrudierte Platten hergestellt werden.

Aufgrund der Möglichkeit, mehrdimensionale Strukturen einfach auszuschäumen und wegen der hervorragenden inhärenten Flammfestigkeit werden im Bergbau zur Stabilisierung von Hohlräumen im Gestein Phenolharzschäume eingesetzt. Aufgrund der kleinen, geschlossenen Zellstruktur gehören Phenolharzschäume zu den Schäumen mit der geringsten thermischen Leitfähigkeit und zeigen daher auch sehr gute thermische Isoliereigenschaften. Phenolharzschäume sind jedoch spröde Hartschäume, die zum Sanden und zur Rissbildung neigen und deshalb für Strukturanwendungen meist nicht ausreichend mechanisch beanspruchbar sind.

Wie vielfach schon gezeigt wurde, verfügen Cyanatharze über ein hervorragendes Eigenschaftsprofil, welches hohe inhärente Flammfestigkeit mit sehr guten thermischen und mechanischen Eigenschaften vereint. Polymere aus polyfunktionellen Cyansäureestern der allgemeinen Formel R(OCN)ₙ finden zunehmend breite Anwendung, insbesondere als Laminierharze und Klebstoffe im High-Tech-Bereich. Sie zeichnen sich insbesondere durch hohe Glastemperaturen, hohe Zersetzungstemperaturen, Schwerentflammbarkeit bereits ohne Zusatz flammwidriger Zusatzstoffe, hohe Zähigkeit im Vergleich zu anderen Hoch-Tg-Duromeren, geringe dielektrische Verluste, gute Adhäsion zu verschiedenen Substratmaterialien, hohe Chemikalienbeständigkeit und ein geringes Korrosionspotential aus. Auch sind sie stofflich recycelbar. Daher sind Cyanatharze vielversprechende Basismaterialien für eine Vielzahl von Anwendungen.

Die Härtungsreaktion der Polycyanate (Polycyclotrimerisierung zu Polycyanuraten) verläuft für sehr reine Monomere relativ langsam. Verunreinigungen aus der Monomersynthese, z.B. restliche Phenole oder Wasserspuren, katalysieren die Härtungsreaktion, die exotherm verläuft und daher leicht außer Kontrolle gerät. Um dies zu vermeiden, werden daher möglichst sehr reine Cyanat-Ausgangsverbindungen eingesetzt, und die Härtungsreaktion wird durch den Zusatz geeigneter Katalysatoren gezielt in Gang gesetzt. Hierfür werden insbesondere Metall-Acetylacetonate, Zinksalze, verschiedene metallorganische Verbindungen sowie Phenole und Verbindungen mit NH-Gruppen wie primäre und sekundäre Amine eingesetzt. Letztere reagieren, wie seit den 60er Jahren des letzten Jahrhunderts bekannt und beispielsweise in WO 01/68741 A1 beschrieben, glatt mit Cyanaten. Sie wirken deshalb nicht nur als Katalysatoren, sondern auch als Reaktionspartner für die Cyanate. Mit mehr als 10 Mol-% Aminverbindung, bezogen auf die Cyanatgruppen, erhält man Harze, die neben der Triazingruppe (A) auch die nachstehenden Strukturelemente B, C und/oder D aufweisen.

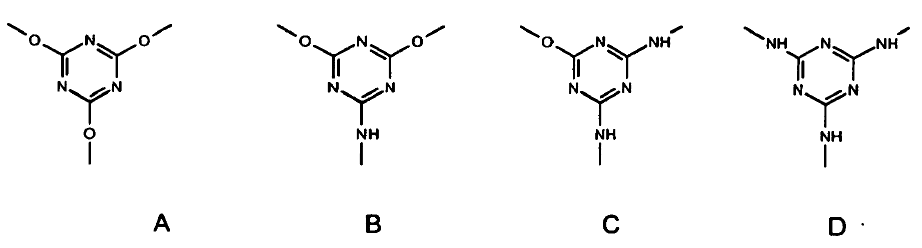

Es ist wünschenswert, auch geschäumte Polycyanurate in Form von Strukturschäumen bereitzustellen, weil diese die höchsten FST-Anforderungen (FST = Flame, Smoke, Toxicity) erfüllen können. Ein weiterer Vorteil ist, dass die Zähigkeit der Harzmatrix in weiten Bereichen auf anwendungsspezifische Anforderungen zugeschnitten werden kann. Weiterhin sollten sich auch auf der Basis von Cyanatharzen Schäume mit gutem thermischem Isolationsvermögen herstellen lassen, da die einstellbaren Verarbeitungsviskositäten denjenigen der Phenolharze ähnlich sind und daher auch ähnliche Zellstrukturen resultieren sollten. Ebenso lassen sich Cyanatharze aufgrund des chemischen Mechanismus umweltverträglich treiben und sind am Produktlebensende auch mit bereits erarbeiteten und patentierten Verfahren rezyklierbar.

In der Literatur gibt es einige Vorschläge zur Herstellung von Cyanatharz-Schäumen. So werden in EP 0457692 B1 und US 5077319 Verfahren beschrieben, die auf dem Schäumen von Mischungen aus Cyanatharzprecursoren (z.B. 2,2-Bis-(4-cyanatophenyl)methan) und einem thermoplastischen Material wie einem Polysulfon, Polyethersulfon, Polyimid oder Polyacrylat oder dergleichen beruhen. Das Schäumen wird vor allem durch ein chemisches Treibmittel (z.B. Azodicarbonamid) erreicht. Diese Methode ist jedoch äußerst kritisch: Die Zersetzung dieser Mittel unter Gasbildung ist nämlich in der Regel exotherm, genauso wie die Cyanat-Polymerisation. Diese ist daher kaum mehr steuerbar. Außerdem sind die Härtungstemperaturen sehr hoch. Gegebenenfalls werden physikalische Treibmittel (z.B. Methylisobutylketon) empfohlen. Diese sind natürlich unter Umweltschutz-Aspekten und hinsichtlich einer möglichen Selbstentzündung nicht tolerabel. Es werden Filme der Ausgangsmaterialien bei hohen Temperaturen (> 200 °C) verschäumt. Die Materialien sind auch zum Füllen von Honeycombs geeignet (US 5338594). Die Anwendungsbeispiele lassen vermuten, dass die Methode nur für hohe Thermoplast-Gehalte geeignet ist.

Gemäß WO 99/23142 werden Cyanurat-Präpolymere unter hohen Drücken mit CO₂ beladen. Das Entspannen führt dann zur Schaumbildung. Der Entspannungsprozess findet wiederum bei hohen Temperaturen statt (170-180 °C). Zudem werden nur recht dichte Schäume erhalten (ρ≈ 1,2 g/cm³).

Aufgabe der vorliegenden Erfindung ist es, Polycyanurat-Schäume bereitzustellen, die vor allem in der zivilen Luftfahrt und im Schienenfahrzeugbau oder im Tunnelbau, aber auch in anderen Bereichen einsetzbar sind, und die deshalb gleichzeitig die folgenden Anforderungen erfüllen sollen:
- Herstellbarkeit von dreidimensionalen großen Bauteilen,
- eine hohe mechanische Stabilität,
- die Erfüllung sehr hoher Standards im Brandfall, insbesondere eine hohe Brandfestigkeit der verpressten Materialien mit geringer Wärmefreisetzungsrate, niedriger Rauchgasdichte sowie geringer Toxizität der gebildeten Brandgase, vorzugsweise gemäß dem Internationalen Standard ISO TC92/SC1 oder der Luftfahrtnorm,
- Verarbeitbarkeit als Reaktivschaum.

In besonders bevorzugten Ausgestaltungen der Erfindung sollen die Schäume weiterhin den folgenden Anforderungen genügen:
- ein geringes Gewicht aufgrund niedriger Dichte,
- gleichmäßige Zellgrößenverteilung bei geringer Zellgröße,
- überwiegend geschlossenporige Struktur,
- geringe Feuchte-Empfindlichkeit,
- Recyclierbarkeit.

Die Bereitstellung solcher Schäume stößt jedoch auf Schwierigkeiten. So ist die Cyclotrimerisierung von Cyanaten wie erwähnt ein exothermer Prozess. Um eine gute Schaumbildung zu erreichen, muss die Reaktion schnell geführt werden, wodurch in kurzen Zeiten große Wärmemengen freigesetzt werden, was eine Zersetzung des Polymerschaumes bewirken kann. Dieser Effekt tritt mit Ansatzvergrößerung, d.h. bei industrierelevanten Einsatzmengen immer deutlicher zutage.

Mit Fortschreiten der Reaktion erhöht sich die Viskosität des Cyanat-Harzes. Nur ein schmaler Viskositätsbereich ergibt eine optimale Schaumbildung. Steigt die Viskosität zu langsam, kommt es zur Koaleszenz der Schaumzellen bzw. fällt der Schaum zusammen. Steigt die Viskosität zu schnell, werden keine ausreichenden Schaumhöhen erreicht.

Überraschenderweise kann erfindungsgemäß ein Polycyanurat-Schaum erhalten werden, ohne dass typische chemische Treibmittel wie Azodicarbonamid oder CO₂ zugegeben werden müssten. Der erfindungsgemäße Schaum enthält in seinen Poren Kohlendioxid, das mit Hilfe von Wasser oder Alkohol aus Cyanatgruppen der zu polymerisierenden Cyanate in situ freigesetzt wurde. Dementsprechend enthält er weiterhin die entsprechenden Reaktionsprodukte dieser Cyanatgruppen bzw. deren Polymerisationsprodukte und damit das Strukturelement A und entweder freie Aminogruppen und/oder mindestens eines der nachfolgenden Strkturelemente B, C oder D:

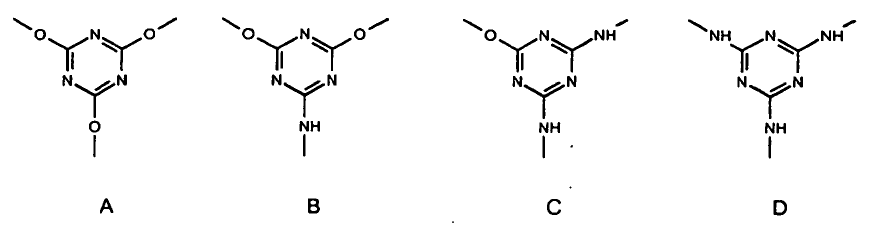

Das Wasser bzw. der Alkohol, der hierfür in das zu polymerisierende Material gelangen muss, wird erfindungsgemäß wie erwähnt in situ gebildet, und zwar etwa gleichzeitig mit dem Beginn der Polymerisation der Cyanatverbindungen. Zu diesem Zweck wird der oder den zu verschäumenden Ausgangssubstanz(en) ein Material zugegeben, das Wasser oder einen Alkohol, insbesondere einen Alkohol mit 1 bis 4 Kohlenstoffatomen, auf physikalischem oder chemischem Wege freisetzen kann (im nachfolgenden als "Wasser- oder Alkoholproduzent" bezeichnet). Die Freisetzung des Wassers oder Alkohols hieraus erfolgt im Wesentlichen synchron mit dem Beginn der Polymerisationsreaktion, sodass das freiwerdende Kohlendioxid das sich verfestigende Polymer aufbläht und dabei eine Vielzahl von geschlossenen Poren bildet. Die Schaumbildung ist damit zeitlich an die Polymerisationsreaktion gekoppelt.

Wenn der Wasser- oder Alkoholproduzent beim Einmischen in die zu verschäumenden Ausgangssubstanz(en) spontan Wasser oder Alkohol freigibt, ist es notwendig, ihn zeitlich relativ genau zu Beginn der Polymerisation zuzusetzen. In allen übrigen Fällen - und damit in der Regel - ist der Zeitpunkt der Zugabe des Wasser- oder Alkoholproduzenten unkritisch. In diesen Fällen wird die Wasser- bzw. Alkoholfreigabe z.B. durch Wärme und/oder die Zugabe eines Katalysators initiiert. Das gebildete Wasser / der gebildete Alkohol reagiert mit einem Teil der freien Cyanatgruppen der Cyanat-Ausgangsverbindung(en) bzw. des sich bildenden (Pre)polymerisats unter CO₂-Abspaltung.

Die Menge an auf diese Weise in das sich bildende Harz eingeschlepptem Wasser kann je nach Bedarf gewählt werden; als günstig hat sich der Zusatz von etwa 3 bis 35 Mol-%, stärker bevorzugt von etwa 5 bis 15 Mol-% und ganz besonders bevorzugt von etwa 7 bis 12 Mol-%, bezogen auf die vorhandenen Cyanatgruppen, erwiesen.

Für die Freisetzung des Wassers oder Alkohols und damit für den "Wasser- oder Alkoholproduzenten" kommt eine Vielzahl von Materialien in Frage. Eine erste Gruppe umfasst Verbindungen, die Wasser oder Alkohol enthalten, das im Kristall gebunden oder durch Van-der-Waals-Kräfte im Molekül gehalten wird, beispielsweise Salzhydrate (also Salze mit ins Kristallgitter eingelagertem Wasser), Oxoniumverbindungen, Aquoxide und Oxidaquate, wobei letztere eine nichtstöchiometrische Menge an Wasser ("Adsorptions-Kapillarwasser"; Beispiel: SnO₂ x nH₂O) beweglich im Molekül enthalten. Eine weitere Gruppe von Verbindungen sind solche, die - gegebenenfalls in Gegenwart eines Katalysators - unter Wasser- oder Alkoholabspaltung mit sich selbst reagieren oder solche, die sich unter Wasser- oder Alkoholabspaltung - katalysiert oder spontan - mit einem Reaktionspartner umsetzen lassen, also einer Kondensationsreaktion unter Freisetzung dieser Moleküle zugänglich sind. Beispiele sind Aminosäuren und esterbildende Systeme (z.B. Säure plus Alkohol) sowie Resole, besonders geeignet sind jedoch Metall- oder Halbmetall-Alkoholate, beispielsweise Alkoxysilane, und Silanolverbindungen. Aus den letzteren entsteht Wasser oder Alkohol durch eine - in der Regel sauer oder basisch (z.B. durch Amine) katalysierte - Kondendensationsreaktion freier SiOH- oder Metall- bzw. Si-Alkoxid-Funktionen unter Bildung von Metall-O-Metall bzw. Si-O-Si-Brücken.

Im Zuge der Cyanatzersetzung durch das eingeschleppte Wasser bzw. den eingeschleppten Alkohol entstehen Zwischenprodukte, die ihrerseits wiederum als Katalysatoren und Coreaktanten für die Härtungsreaktionen wirken, darunter insbesondere Amine. Im Fall der Salzhydrate oder Metallalkoxide wirken auch häufig deren Kationen katalytisch (z.B. im Falle von Salzen oder Akoxiden des Al³⁺, Co²⁺, Cu²⁺ , Ni²⁺), während in dem Fall, in dem Wasser oder Alkohol im Zuge einer Kondensationsreaktion freigesetzt wird, der für die Kondensation eingesetzte Katalysator häufig gleichzeitig als Katalysator für die Härtungsreaktion der Cyanate wirken kann. Diese gilt insbesondere für die Kondensation von Akoxysilanen oder Silanolen. Aus diesem Grund gelingt die Schaumbildung bei Temperaturen, die deutlich niedriger liegen als in den bisher bekannten Verfahren, nämlich in der Regel bei ca. 100°C bis 160°C und insbesondere bei etwa 120°C bis 140°C. Gegebenenfalls kann die Reaktivität auch durch Beigabe von für die Katalyse der Cyanathärtung bekannten Verbindungen, wie sie oben erwähnt sind, verändert (weiter erhöht) werden. Darüber hinaus ist die wasser- oder alkoholabspaltende Kondensationsreaktion eine Polymerisationsreaktion, deren Produkt sich verfestigt, so dass sich in Fällen, in denen eine Kondensationsreaktion als Quelle für das Wasser oder den Alkohol eingesetzt wird, entweder zwei chemisch möglicherweise nicht oder nur in untergeordnetem Maße miteinander reagierende Komponenten unabhängig voneinander in höher- oder hochmolekulare Strukturen umwandeln und einander dabei ggf. durchdringen, oder aber dass dann, wenn diese beiden Komponenten auch untereinander reagieren können, gute mechanische Eigenschaften erhalten werden könne, beispielsweise eine höhere Bruchzähigkeit.

Das erfindungsgemäße Schaumbildungsverfahren toleriert die üblichen Füllstoffzusätze, die für Cyanatharze bekannt sind. Beispiele (die in keiner Weise beschränkt sein sollen) sind Partikel oder Fasern aus Graphit, anorganischen Materialen (z.B. Al₂O₃, SiO₂) oder sogenannte Core-Shell-Partikel, die aus einem anorganischen Kern und einem organischen Polymer als Hülle bestehen. Diese können in einem weiten Mengenbereich (bis zu 80 Vol.-%) zugesetzt werden, vorzugsweise bis zu 40 Vol.-%. Stärker bevorzugt liegt der Füllstoffanteil zwischen 3 und 30 Vol.-%, noch stärker bevorzugt zwischen 5 und 20 Vol.-%. 10 bis 16 Vol.-% sind am meisten bevorzugt.

Das Schaumbildungsverfahren toleriert weiterhin den Zusatz von Thermoplasten, z.B Polyethersulfon, Polyamiden, Polyacrylaten, Polyetherketonen, Polysulfonen und dergl. Durch diese Zusätze lässt sich z.B. die Zähigkeit der leicht zur Sprödigkeit neigenden Cyanatharzschäume verbessern.

Die Wahl der als Ausgangsmaterial für das Harz einzusetzenden multifunktionellen Cyanate ist nicht kritisch. Prinzipiell kann jeder mindestens bifunktionelle Cyanatkörper eingesetzt werden, darunter vor allem di- oder polyfunktionelle Cyanate der nachfolgend aufgeführten Strukturen I-III: 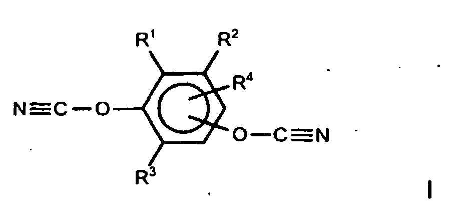 worin R¹ bis R⁴ unabhängig voneinander Wasserstoff, C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können. Beispiele sind Phenylen-1,3-dicyanat, Phenylen-1,4-dicyanat, 2,4,5-Trifluorophenylen-1,3-dicyanat; 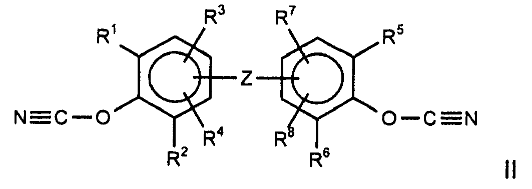 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder 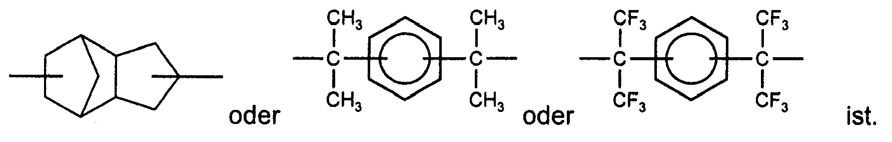 ist.

Beispiele sind 2,2-Bis(4-cyanato-phenyl)propan, 2,2-Bis(4-cyanato-phenyl)hexafluoropropan, Biphenylen-4,4'-dicyanat; 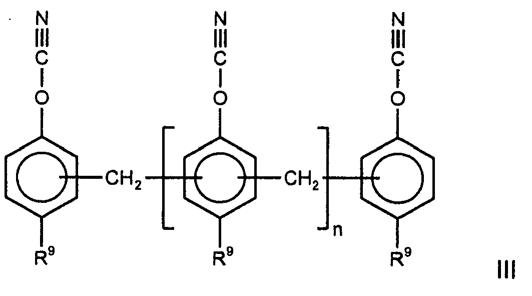 worin R⁹ Wasserstoff oder C₁-C₁₀-Alkyl ist und n eine ganze Zahl von 0 bis 20 bedeutet.

Die genannten Cyanate können als Monomere oder als Prepolymere, allein oder in Mischungen untereinander oder im Gemisch mit weiteren mono-, di- oder polyfunktionellen Cyanaten eingesetzt werden. Außerdem oder stattdessen können weitere, mit Cyanaten copolymerisierende Zusätze beigegeben werden, beispielsweise Mono- oder Diphenole oder Gycidether, wie aus dem Stand der Technik bekannt.

Als Beispiele für gut geeignete Cyanate seien das Dicyanat von Bisphenol A (4,4'-Dimethylmethylen-diphenyldicyanat), 4,4'Ethylidendiphenyldicyanat oder Verbindungen mit der Formel III genannt, worin n 1, 2 oder 3 ist, R⁹ Wasserstoff ist und die Methylengruppe jeweils in ortho-Position zur Cyanatgruppe steht.

Werden als Wasser- oder Alkoholproduzenten Salzhydrate oder Metallalkoxide eingesetzt, enthalten diese vorzugsweise zwei oder dreiwertige Kationen.

Die Salzhydrate werden als fein gemahlene Pulver eingesetzt. Vorzugsweise handelt es sich dabei um wasserunlösliche oder schlecht wasserlösliche Verbindungen. Insbesondere sind hydrophobierte Substanzen günstig. Es hat sich nämlich herausgestellt, dass hydrophobe bzw. hydrophobierte Salzhydrate oder dgl. bei gleichem Füllgrad die Viskosität des zu schäumenden Materials weniger ansteigen lassen als die unbehandelten, hydrophilen Verbindungen. Zur Hydrophobierung sind die üblichen Stoffe geeignet, die aus dem Stand der Technik bekannt sind (z.B. Alkylsilane, Fettsäuren, Alkylphosphate).

Als Beispiele für gut geeignete Salzhydrate seien Co₃(PO₄)₂ x 8 H₂O, Pb(Acetat)₂ x 3 H₂O (oder x 10 H₂O) und 4 MgCO₃ x Mg(OH)₂ x 4 oder 5 H₂O ("künstliches basisches Magnesiumcarbonat", Magnesia alba, wasserunlöslich) genannt. Salzhydrate verlieren ihr Wasser insbesondere bei Erwärmen auf Temperaturen beispielsweise im Bereich von 70-130°C.

Wird das Wasser oder der Alkohol zur Zersetzung von Cyanatgruppen durch Kondensationsprozesse gewonnen, so sind neben Silanolen und Metallalkoxiden insbesondere Siloxantypen mit freien OH- oder -OR-Gruppen einsetzbar. Metallalkoxide kondensieren unter M-O-M-Bildung vorzugsweise in Gegenwart von sauren oder alkalischen Katalysatoren, beispielsweise Aminen.

Als Beispiel für Metallalkoxide sei R'ₐSi(OR)₄₋ₐ oder Al(OR)₃ mit R' = über Kohlenstoff am Silicium gebundener Rest, a = 0 oder 1 und R gleich C₁-C₄-Alkyl genannt. Als Silanverbindungen sind insbesondere Silsesquioxane günstig, weil sie bei den Temperaturen, bei denen die üblicherweise verwendeten Cyanatverbindungen aufschmelzen, ebenfalls flüssig und auch mit der Cyanatschmelze mischbar sind. Dabei sind Arylsilsesquioxane wie Phenylsilsesquioxane in vielen Fällen besonders bevorzugt, und zwar insbesonderen dann, wenn die eingesetzte(n) Cyanat-Ausgangsverbindung(en) ebenfalls Phenylgruppen enthalten, weil sie sich in deren Schmelze besonders gut lösen. Bei diesem Typ - wie bei den meisten Alkoxysilanen oder Silanolen - springt die Kondensationsreaktion insbesondere auch bei Zugabe von solchen Katalysatoren an, die auch bei der Cyanuratbildung katalytisch wirken.

Die zu verschäumenden Ansätze können in geringer Menge Lösungsmittel enthalten, das im Verlaufe der Schaumbildung und Härtung verdampft, somit zur Zellenbildung beiträgt und zudem die Reaktionswärme abführt.

Als Lösungsmittel eignen sich hierfür insbesondere wenig polare bzw. dipolar aprotische Lösungsmittel und darunter vorzugsweise solche, die bei Normaldruck in einem Temperaturbereich von 120-240 °C sieden.

Das Material des oder der ggf. zuzusetzenden Füllstoffe ist nicht kritisch. Diesbezüglich kann auf übliche Füllstoffe wie z.B. Mikrofiller verwiesen werden, wie sie als Verstärkungsmaterialien in Duromeren eingesetzt werden, also Füllstoffe mit einer Korngrößenverteilung, deren Schwerpunkt im µm-Bereich liegt. Aber auch Nanofiller mit kleineren Korngrößen (Korngrößenverteilung mit Schwerpunkt unterhalb des µm-Bereichs) sind möglich, z.B. Aerosile mit mittleren Teilchengrößen kleiner 100nm. Alternativ oder zusätzlich können auch Fasern als Füllstoffe dienen, insbesondere kurze bzw. geschnittene Fasern (vorzugsweise mit einer Länge im Bereich von wenigen µm über den mm-Bereich bis zu mehreren cm langen Fasern) oder Whisker. Unabhängig davon, ob Mikrofiller und/oder Nanofiller und/oder Fasern eingesetzt werden, werden diese vorzugsweise ausgewählt unter anorganischen Füllstoffen, die gegebenenfalls organisch modifiziert und/oder beschichtet sein können. Sofern die Füllstoffe phosphororganische Bestandteile enthalten, verstärken sie die Brandsicherheit. Geeignete Materialien sind beispielsweise Siliciumdioxid, keramische Materialien, organisch modifizierte Silikone oder Siloxane oder Mischungen hiervon, insbesondere solche mit sehr hohen Oberflächen und/oder kleinen Korngrößen, wie z.B. Aerosil® von Degussa, phosphororganische Verbindungen wie EXOLIT OP 930 von Clariant, gegebenenfalls organophil modifizierter Bentonit wie Nanofil 2 der Südchemie oder mit einer organischen Beschichtung (z.B. einem Acrylat) beschichtete anorganische Teilchen oder solche aus einer organisch-anorganischen Matrix, z.B. aus einem Heteroorganopolysiloxan (sog. Core-Shell-Partikel). Letztere können beispielsweise so aufgebaut sein, dass sie einen weichen (elastomeren) Kern und eine harte (Polymer)-Schale aufweisen. Solche Partikel können z.B. u.a. bruchzähmodifizierende Eigenschaften aufweisen. Für Fasern eignen sich darüber hinaus Materialien wie beispielsweise Glas, Kohle, Kunststoffe (z.B. Polyester, Polyamide) oder Basalt.

Die Füllstoffe können allein oder in Mischung eingesetzt werden. Als sehr gut geeignet haben sich Mischungen verschiedener Füllstoffe aus unterschiedlichen Materialien erwiesen. Ihr Anteil im Harz kann wie erwähnt vorzugsweise bis zu 40 Masse-% betragen.

Fakultativ können dem Ausgangsmaterial für die Harze weitere Zusätze beigegeben werden, oder solche Zusätze werden in das präpolymerisierte Harz nachträglich eingearbeitet. Beispiele für solche Additive sind oberflächenmodifizierende, z.B. die Oberflächenspannung senkende Mittel wie das fluorkohlenstoffmodifizierte Polymer EFKA-8300 von EFKA Additives BV, Niederlande oder Siloxan-PEG Copolymerew wie DC 198 (Dow Chemicals).

Zur Herstellung des Polycyanurat-Schaums unter Einsatz von Materialien, die im Kristall gebunden oder durch Van-der-Waals-Kräfte gehalten Wasser oder Alkohol enthalten, wird in der Regel zunächst eine Grundmischung bereitet aus Cyanat-Ausgangsverbindungen, dem Wasser- oder Alkoholproduzenten sowie ggf. Füllstoffen und/oder thermoplastischen Zusätzen. Die Komponenten können im festen Zustand vermischt werden. Ebenso ist es möglich, den Cyanatanteil in einem niedrigsiedenden Lösungsmittel (z.B. Butanon) zu lösen, in der Lösung die Feststoffe und andere Bestanteile zu dispergieren bzw. aufzulösen und anschließend das Lösungsmittel einzudampfen. Alternativ kann z.B. aus einem thermoplastischen Zusatz, dem Wasser-oder Alkoholproduzenten und ggf. dem Füllstoff ein Masterbatch bereitet werden, der dann mit den Cyanat-Ausgangsverbindungen vermischt wird. Die Grundmischung wird mit weiteren Zusätzen (z.B. Lösungsmittel, grenzflächenaktive Stoffe) versetzt und dann erwärmt. Die Erwärmung führt zur Freisetzung des Wassers oder Alkohols. Wirkt der Wasser- oder Alkoholproduzent gleichzeitig als Katalysator für die Cyanurat-Härtung, kann, muss aber nicht, ein zusätzlicher Katalysator hierfür beigegeben werden. Die Schaumbildung setzt im Bereich ab etwa 100 °C ein; in manchen Fällen kann diese Temperatur jedoch auch etwas höher liegen, z.B. bei 110 °C oder sogar im Bereich von 150 °C oder 160 °C.

Zur Herstellung des Polycyanurat-Schaums nach der Kondensations-variante können zunächst (falls erforderlich) die Cyanat-Ausgangsverbindungen und die Verbindung oder das System, das bei Kondensation Wasser oder Alkohol freigibt (der Wasser- oder Alkoholproduzent, z.B. ein OH- oder OR-Gruppen enthaltendes Siloxan) getrennt geschmolzen werden. Füllstoffe bzw. thermoplastische Zusätze können mit den Schmelzen vermischt werden. Ebenso ist es möglich, Cyanat- und/oder Kondensations-Komponente in einem niedrigsiedenden Lösungsmittel (z.B. Butanon) zu lösen, diesen Lösungen Füllstoffe bzw. Thermoplast-Additive zusetzen und anschließend das Lösungsmittel so einzudampfen, dass wiederum Schmelzen bzw. Suspensionen entstehen. Die entsprechend der genannten Varianten erhaltenen (flüssigen) Cyanat-und Kondensations-Komponenten werden vermischt, mit einer Katalysator-Lösung versetzt, die möglichst beide Reaktionen - die Kondensation und die Härtung - katalysiert, und dann erwärmt. Die Schaumbildung setzt wiederum im Bereich ab etwa 100 °C ein; auch hier kann diese Temperatur jedoch etwas höher liegen, z.B. bei 110 °C oder sogar im Bereich von 150 °C oder 160 °C.

Nachstehend soll die Erfindung anhand von Beispielen näher erläutert werden.

### Beispiel 1: Kondensationsmethode, mit Core-Shell-Füllstoff

2,2-Bis-(4-Cyanatophenyl)propan (Mengenanteil: 60 %) und Genioperl P52 (ein Kieselgelpulver der Firma Wacker, dessen Teilchen mit einem organischen Polymer umhüllt sind, als Beispiel für einen Core-Shell-Füllstoff, Mengenanteil: 10 %); werden in einer Planetenkugelmühle gemischt. Anschließend belässt man die Mischung für 30 min bei 135 °C. Zu dem nun als Suspension vorliegenden Gemisch (Schmelzen des Cyanatharzes infolge der Wärmebehandlung) gibt man unter Rühren Phenylsilsesquioxan-Dimethylsiloxan-Copolymer (Mengenanteil: 38 %). Nach einer erneuten Wärmebehandlung von bei 135 °C wird die Katalysatorlösung (Zinkacetylacetonat in Tetramethylharnstoff, Mengenanteile: 0,06 % bzw. 1,94 %) zugegeben. Der Schaum bildet sich nach ca. 15 min nach einer weiteren Wärmebehandlung der Mischung bei 135°C. Nach dem Entformen wird der Schaum zur weiteren Entfernung flüchtiger organischer Bestandteile 5 h bei 220 °C belassen.

### Beispiel 2: Kondensationsmethode, mit Korund-Füllstoff

Nach dem in Beispiel 1 beschriebenen Verfahren kann auch ein Schaum aus 2,2-Bis-(4-Cyanatophenyl)propan (Mengenanteil: 60 %) und Aluminiumoxid (Korund, bezogen von der Fa. Alcoa, Mengenanteil: 10 %), Phenylsilsesquioxan-Dimethylsiloxan-Copolymer (Mengenanteil: 38 %) und Katalysatorlösung (Zinkacetylacetonat in Tetramethylharnstoff, Mengenanteile: 0,06 % bzw. 1,94 %) erhalten werden.

### Beispiel 3: Kondensationsmethode, ohne Füllstoff

2,2-Bis-(4-Cyanatophenyl)propan (Mengenanteil: 70 %) und Phenylsilsesquioxan-Dimethylsiloxan-Copolymer (Mengenanteil: 28 %) werden getrennt geschmolzen, wie in Beispiel 1 beschrieben vermischt, mit einer Katalysatorlösung (Kupferstearat in Dimethylenglycoldimethylether, Mengenanteile: 0,06 % bzw. 1,94 %) versetzt und bei 130 °C verschäumt.

### Beispiel 4: Salzhydratmethode, ohne Füllstoff

2,2-Bis-(4-Cyanatophenyl)methan (Mengenanteil: 88 %) und basisches Magnesiumcarbonat (Mengenanteil: 10 %) werden mit Butanon (dreifache Masse bezogen auf die Ansatzgröße) in einer Planetenkugelmühle gemahlen. Nach dem Abdampfen des Lösungsmittels wird die zurückbleibende Suspension mit Dimethylenglycoldimethylether (Mengenanteil 2%) vermischt und auf 140 °C erwärmt. Nach kurzer Zeit erfolgt die Schaumbildung.

### Beispiel 5: Salzhydratmethode, Masterbatch-Variante mit Füllstoff

Zur Bereitung eines Masterbatches werden zunächst 10 g Polyethylenglycol 4000, 10 g mit Stearinsäure hydrophobiertes Al₂O₃ und 8 g Co₃(PO₄)₂ x 8H₂O mit 15 ml Butanon für drei Stunden in einer Planetenkugelmühle gemahlen. Anschließend wird das Lösungsmittel abgedampft.

2,2-Bis-(4-Cyanatophenyl)propan (Mengenanteil: 84,2 %), der Masterbatch (Mengenanteil: 14 %), Tetramethylharnstoff (Mengenanteil: 1,5 %) und Schaumstabilisator DABCO DC 198 (Hersteller: Air Products; Mengenanteil: 0,3 %) werden gründlich vermischt. Die Mischung wird dann auf 135 °C erwärmt. Nach kurzer Zeit erfolgt die Schaumbildung.

Insbesondere betrifft die Anmeldung Folgendes:
A. Polycyanurat-Schaum, enthaltend das Strukturelement A und entweder endständige Aminogruppen und/oder mindestens eines der nachfolgenden Strukturelemente B, C oder D: 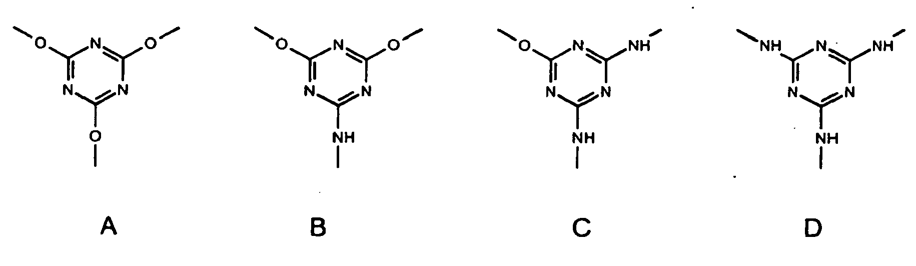 wobei der Schaum geschlossene Poren aufweist, die Kohlendioxid enthalten.
B. Polycyanurat-Schaum nach Absatz A, weiterhin enthaltend das Produkt einer wasser- oder alkoholfreisetzenden Kondensationsreaktion und/oder eine Substanz, die in der Lage ist, physikalisch Wasser und/oder Alkohol zu binden und abzugeben, im Zustand nach Abgabe eines Teils dieses oder des gesamten Wassers/Alkohols.
C. Polycyanuratschaum nach Absatz B, worin die Substanz, die in der Lage ist, physikalisch Wasser und/oder Alkohol zu binden und abzugeben, mindestens ein Salz eines oder mehrerer Metall- oder Halbmetallkationen ist, vorzugsweise ausgewählt unter zwei- und/oder dreiwertigen Kationen.
D. Polycyanuratschaum nach Absatz C, **dadurch gekennzeichnet, dass** das Salz ein Salzhydrat ist, das zumindest einen Teil seiner Wassermoleküle abgegeben hat, wobei das Salzhydrat vorzugsweise schlecht wasserlöslich war.
E. Polycyanuratschaum nach Absatz D, **dadurch gekennzeichnet, dass** das Salzhydrat vor der Abgabe der Wassermoleküle Co₃(PO₄)₂ x 8 H₂O war.
F. Polycyanuratschaum nach einem der Absätze D oder E, **dadurch gekennzeichnet, dass** das Salzhydrat in Form eines hydrophobierten Pulver eingesetzt wurde.
G. Polycyanuratschaum nach Absatz B, worin das Produkt einer wasser- oder alkoholfreisetzenden Kondensationsreaktion ein Siloxan oder ein organischer Ester ist.
H. Polycyanuratschaum nach Absatz G, **dadurch gekennzeichnet, dass** als Ausgangsmaterial für die Kondensationsreaktion Silsesquioxane eingesetzt wurden.
I. Polycyanurat-Schaum nach einem der voranstehenden Absätze, erhalten unter Verwendung mindestens eines di- oder polyfunktionellen organischen Cyanats, ausgewählt unter Cyanaten der Formeln I bis III: 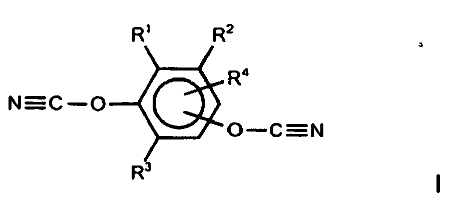 worin R¹ bis R⁴ unabhängig voneinander Wasserstoff, C₁-C₁₀-Alkyl, C₃-C₈-Cycloalkyl, C₁-C₁₀-Alkoxy, Halogen, Phenyl oder Phenoxy ist, wobei die Alkyl-oder Arylgruppen fluoriert oder teilfluoriert sein können, 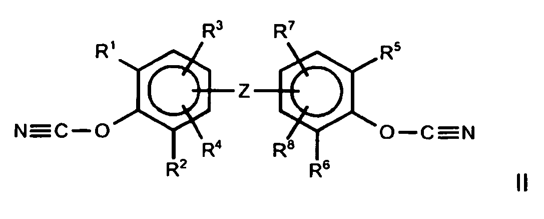 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 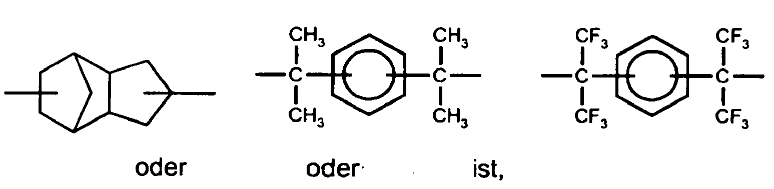 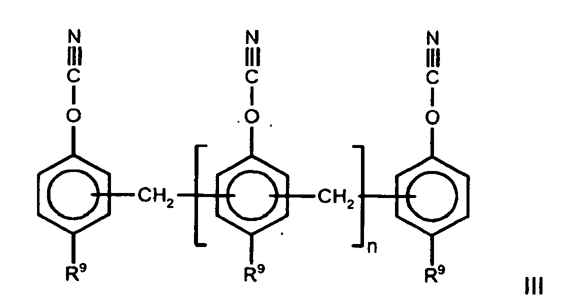 worin R⁹ Wasserstoff oder C₁-C₁₀-Alkyl ist und n einen Wert von 0 bis 20 darstellt,
   sowie unter Prepolymeren der vorgenannten Cyanate.
J. Polycyanuratschaum nach Absatz I, dadurch gekennzeichnet, dass neben dem oder den genannten Cyanaten der Formeln (I) bis (III) mindestens ein monofunktionelles Cyanat und/der eine Mono- oder Diphenol und/oder ein Glycidether für seine Herstellung verwendet wurden.
K. Polycyanuratschaum nach einem der voranstehenden Absätze, zusätzlich enthaltend mindestens einen Füllstoff.
L. Polycyanuratschaum nach Absatz K, worin der oder mindestens einer der Füllstoffe ausgewählt ist unter Mikrofillern und/oder Nanofillern und/oder Fasern aus anorganischem, gegebenenfalls organisch modifiziertem und/oder beschichtetem Material.
M. Polycyanuratschaum nach Absatz L, worin der oder mindestens einer der Füllstoffe ausgewählt ist unter Glas, Kohle, Basalt, Siliciumdioxid, keramischen Materialien, organisch modifizierten Silikonen oder Siloxanen oder Mischungen hiervon, insbesondere solchen mit sehr hohen Oberflächen und/oder kleinen Korngrößen.
N. Polycyanuratschaum nach einem der Absätze K bis M, worin der oder mindestens einer der Füllstoffe ausgewählt ist unter Core-Shell-Partikeln.
O. Polycyanuratschaum nach einem der Absätze K bis M, umfassend mindestens zwei verschiedene Füllstoff-Materialien und/oder -Größen und/oder -Formen.
P. Polycyanuratschaum nach einem der voranstehenden Absätze, worin die Mischung mindestens einen weiteren Zusatz aufweist.
Q. Polycyanuratschaum nach Absatz P, worin der Zusatz ausgewählt ist unter oberflächenmodifizierenden, vorzugsweise die Oberflächenspannung senkenden Mitteln.
R. Polycyanuratschaum nach Absatz P, worin der Zusatz ausgewählt ist unter thermoplastischen Kunststoffen.
S. Verfahren zum Herstellen eines Polycyanuratschaums nach einem der voranstehenden Absätze, gekennzeichnet durch die folgenden Schritte:
   a) Bereitstellen einer Grundmischung, enthaltend mindestens ein polymerisierbares organisches Cyanat,
   b) Bereitstellen einer auf physikalischem oder chemischem Wege Wasser oder einen Alkohol abgebenden Substanz,
   c) Mischen der unter (a) und (b) genannten Komponenten,
   d) Bewirken der Freisetzung von Wasser oder Alkohol aus der Wasser oder einen Alkohol abgebenden Substanz, und
   e) Bewirken der Polymerisation des mindestens einen polymerisierbaren organischen Cyanats.
T. Verfahren nach Absatz S, **dadurch gekennzeichnet, dass** die auf physikalischem oder chemischem Wege Wasser oder einen Alkohol abgebenden Substanz in festem Zustand in die Grundmischung gemäß (a) eingearbeitet wird und das Bewirken der Freisetzung von Wasser oder Alkohol sowie das Bewirken der Polymerisation des mindestens einen polymerisierbaren organischen Cyanats durch Wärme, ggf. unterstützt durch einen weiterhin zugegebenen Katalysator, initiiert wird.
U. Verfahren nach Absatz T, worin die auf physikalischem oder chemischem Wege Wasser oder einen Alkohol abgebende Substanz ein ggf. hydrophobiertes Salzhydrat ist.
V. Verfahren nach Absatz U, worin das Salzhydrat zwei- und/oder dreiwertige Kationen enthält und vorzugsweise ausgewählt ist unter Co₃(PO₄)₂ x 8 H₂O, und 4 MgCO₃ × Mg(OH)₂ x 4 oder 5 H₂O.
W. Verfahren nach Absatz S oder T, **dadurch gekennzeichnet, dass** die auf physikalischem oder chemischem Wege Wasser oder einen Alkohol abgebende Substanz ein kondensierbares Material ist, das bei seiner Kondensation Wasser oder einen Alkohol abgibt, dass die Grundmischung gemäß (a) geschmolzen oder in einem niedrigsiedenden Lösungsmittel gelöst wird, dass die auf physikalischem oder chemischem Wege Wasser oder einen Alkohol abgebende Substanz in die Schmelze oder Lösung der Grundmischung gemäß (a) eingebracht wird und die Abgabe von Wasser oder Alkohol daraus und die Polymerisation des mindestens einen Cyanats gleichzeitig durch Zugabe eines oder mehrerer Katalysatoren in die gebildete Mischung, ggf. unter Zufuhr von Wärme, bewirkt wird.
X. Verfahren nach Absatz W, worin die auf physikalischem oder chemischem Wege Wasser oder einen Alkohol abgebende Substanz ein Silanol oder ein Metall- oder Halbmetallalkoxid ist.
Y. Verfahren nach Absatz X, worin die auf physikalischem oder chemischem Wege Wasser oder einen Alkohol abgebende Substanz ein Silsesquisiloxan oder ein Metall- oder Halbmetallalkoxid mit der Formel M(OR)ₙ mit M gleich Silicium(IV), Aluminium(III), R gleich C₁-C₄-Alkyl und n gleich 3 oder 4 ist.
Z. Verfahren nach einem der Absätze S bis Y, worin das mindestens eine Cyanat ausgewählt ist unter di- oder polyfunktionellen organischen Cyanaten der Formeln I bis III: 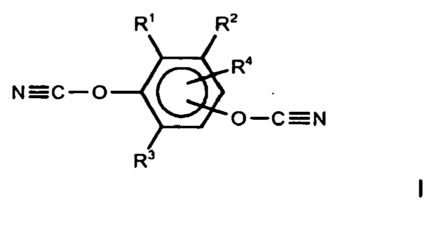 worin R¹ bis R⁴ unabhängig voneinander Wasserstoff, C₁-C₁₀-Alkyl, C₃-C₈-Cycloalkyl, C₁-C₁₀-Alkoxy, Halogen, Phenyl oder Phenoxy ist, wobei die Alkyl-oder Arylgruppen fluoriert oder teilfluoriert sein können, 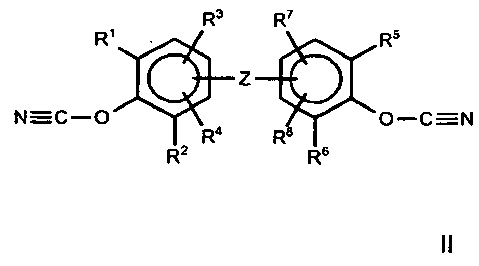 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 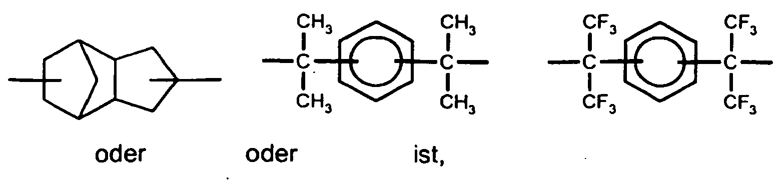 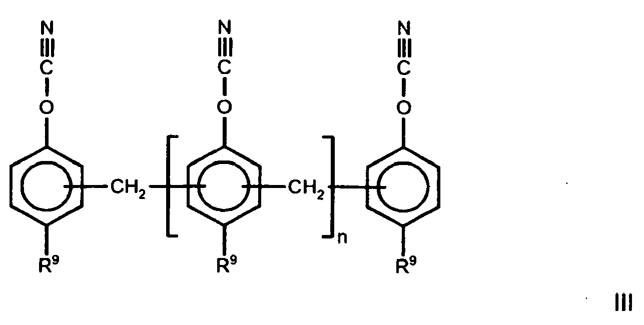 worin R⁹ Wasserstoff oder C₁-C₁₀-Alkyl ist und n einen Wert von 0 bis 20 darstellt, sowie unter Prepolymeren der vorgenannten Cyanate.
Ä. Verfahren nach einem der Absätze S bis Z, worin die Grundmischung gemäß (a) mindestens einen Füllstoff enthält oder worin nach Mischen der Komponenten gemäß (c) mindestens ein Füllstoff zugesetzt wird.
Ö. Verfahren nach einem der Absätze S bis Ä, worin die Grundmischung gemäß (a) mindestens einen weiteren Zusatz enthält oder worin nach Mischen der Komponenten gemäß (c) mindestens ein weiterer Zusatz zugemischt wird.
Ü. Verfahren nach Absatz Ö, worin der Zusatz ausgewählt ist unter oberflächenmodifizierenden, vorzugsweise die Oberflächenspannung senkenden Mitteln und/oder thermoplastischen Kunststoffen.
β. Verfahren nach einem der Absätze S bis Ü, worin nach dem Vermischen aller Komponenten die Mischung zum Schäumen auf eine Temperatur zwischen 110 und 150°C gebracht und nach Beendigung der Schaumbildung wieder auf Raumtemperatur abgekühlt wird.

## Patentansprüche

1. Polycyanurat-Schaum, enthaltend das Strukturelement A und entweder endständige Aminogruppen und/oder mindestens eines der nachfolgenden Strukturelemente B, C oder D: 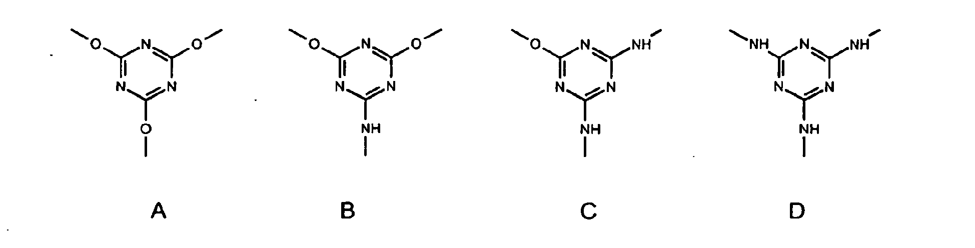 wobei der Schaum geschlossene Poren aufweist, die Kohlendioxid enthalten.

2. Polycyanurat-Schaum nach Anspruch 1, weiterhin enthaltend das Produkt einer wasser- oder alkoholfreisetzenden Kondensationsreaktion und/oder eine Substanz, die in der Lage ist, physikalisch Wasser und/oder Alkohol zu binden und abzugeben, im Zustand nach Abgabe eines Teils dieses oder des gesamten Wassers/Alkohols.

3. Polycyanuratschaum nach Anspruch 2, worin die Substanz, die in der Lage ist, physikalisch Wasser und/oder Alkohol zu binden und abzugeben, mindestens ein Salz eines oder mehrerer Metall- oder Halbmetallkationen ist, vorzugsweise ausgewählt unter zwei- und/oder dreiwertigen Kationen.

4. Polycyanuratschaum nach Anspruch 3, **dadurch gekennzeichnet, dass** das Salz ein Salzhydrat ist, das zumindest einen Teil seiner Wassermoleküle abgegeben hat, wobei das Salzhydrat vorzugsweise schlecht wasserlöslich war.

5. Polycyanuratschaum nach Anspruch 4, **dadurch gekennzeichnet, dass** das Salzhydrat in Form eines hydrophobierten Pulvereingesetzt wurde.

6. Polycyanuratschaum nach Anspruch 2, worin das Produkt einer wasser- oder alkoholfreisetzenden Kondensationsreaktion ein Siloxan oder ein organischer Ester ist.

7. Polycyanurat-Schaum nach einem der voranstehenden Ansprüche, erhalten unter Verwendung mindestens eines di- oder polyfunktionellen organischen Cyanats, ausgewählt unter Cyanaten der Formeln I bis III: 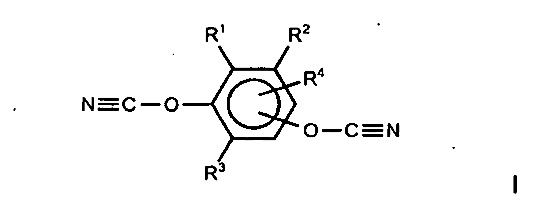 worin R¹ bis R⁴ unabhängig voneinander Wasserstoff, C₁-C₁₀₀-Alkyl, C₃-C₈-Cycloalkyl, C₁-C₁₀-Alkoxy, Halogen, Phenyl oder Phenoxy ist, wobei die Alkyloder Arylgruppen fluoriert oder teilfluoriert sein können, 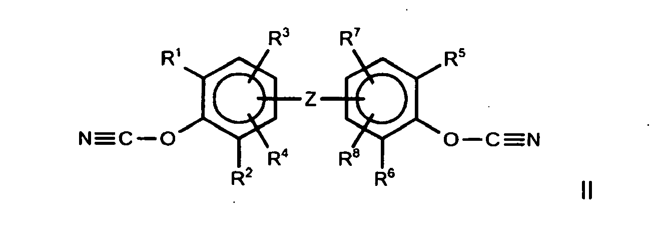 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 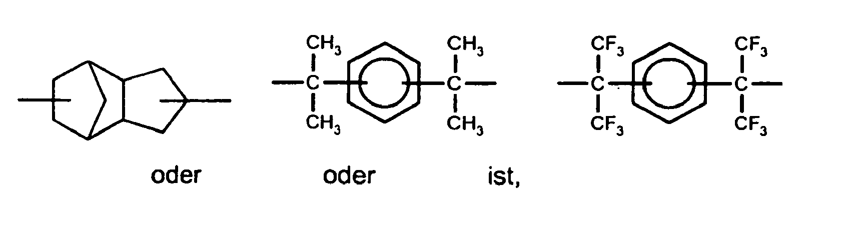 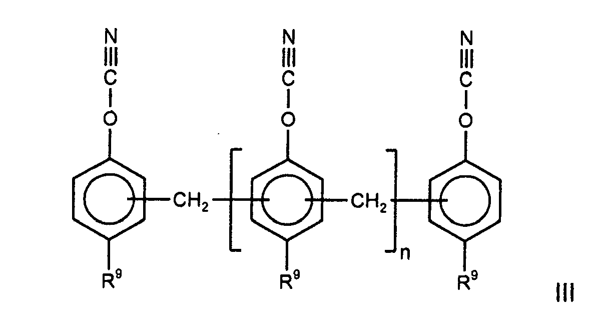 worin R⁹ Wasserstoff oder C₁-C₁₀-Alkyl ist und n einen Wert von 0 bis 20 darstellt,
sowie unter Prepolymeren der vorgenannten Cyanate.

8. Polycyanuratschaum nach Anspruch 7, **dadurch gekennzeichnet, dass** neben dem oder den genannten Cyanaten der Formeln (I) bis (III) mindestens ein monofunktionelles Cyanat und/oder ein Mono- oder Diphenol und/oder ein Glycidether für seine Herstellung verwendet wurden.

9. Polycyanuratschaum nach einem der voranstehenden Ansprüche, zusätzlich enthaltend mindestens einen Füllstoff.

10. Polycyanuratschaum nach Anspruch 9, worin der oder mindestens einer der Füllstoffe ausgewählt ist unter Mikrofillern und/oder Nanofillern und/oder Fasern aus anorganischem, gegebenenfalls organisch modifiziertem und/oder beschichtetem Material.

11. Verfahren zum Herstellen eines Polycyanuratschaums nach einem der voranstehenden Ansprüche, **gekennzeichnet durch** die folgenden Schritte:
a) Bereitstellen einer Grundmischung, enthaltend mindestens ein polymerisierbares organisches Cyanat,
b) Bereitstellen einer auf physikalischem oder chemischem Wege Wasser oder einen Alkohol abgebenden Substanz,
c) Mischen der unter (a) und (b) genannten Komponenten,
d) Bewirken der Freisetzung von Wasser oder Alkohol aus der Wasser oder einen Alkohol abgebenden Substanz, und
e) Bewirken der Polymerisation des mindestens einen polymerisierbaren organischen Cyanats.

12. Verfahren nach Anspruch 11, **dadurch gekennzeichnet, dass** die auf physikalischem oder chemischem Wege Wasser oder einen Alkohol abgebenden Substanz in festem Zustand in die Grundmischung gemäß (a) eingearbeitet wird und das Bewirken der Freisetzung von Wasser oder Alkohol sowie das Bewirken der Polymerisation des mindestens einen polymerisierbaren organischen Cyanats durch Wärme, ggf. unterstützt durch einen weiterhin zugegebenen Katalysator, initiiert wird, wobei die auf physikalischem oder chemischem Wege Wasser oder einen Alkohol abgebende Substanz vorzugsweise ein ggf. hydrophobiertes Salzhydrat ist.

13. Verfahren nach Anspruch 11 oder 12, **dadurch gekennzeichnet, dass** die auf physikalischem oder chemischem Wege Wasser oder einen Alkohol abgebende Substanz ein kondensierbares Material ist, das bei seiner Kondensation Wasser oder einen Alkohol abgibt, dass die Grundmischung gemäß (a) geschmolzen oder in einem niedrigsiedenden Lösungsmittel gelöst wird, dass die auf physikalischem oder chemischem Wege Wasser oder einen Alkohol abgebende Substanz in die Schmelze oder Lösung der Grundmischung gemäß (a) eingebracht wird und die Abgabe von Wasser oder Alkohol daraus und die Polymerisation des mindestens einen Cyanats gleichzeitig durch Zugabe eines oder mehrerer Katalysatoren in die gebildete Mischung, ggf. unter Zufuhr von Wärme, bewirkt wird, wobei die auf physikalischem oder chemischem Wege Wasser oder einen Alkohol abgebende Substanz vorzugsweise ein Silanol oder ein Metall- oder Halbmetallalkoxid ist.

14. Verfahren nach einem der Ansprüche 11 bis 13, worin das mindestens eine Cyanat ausgewählt ist unter di- oder polyfunktionellen organischen Cyanaten der Formeln I bis III: 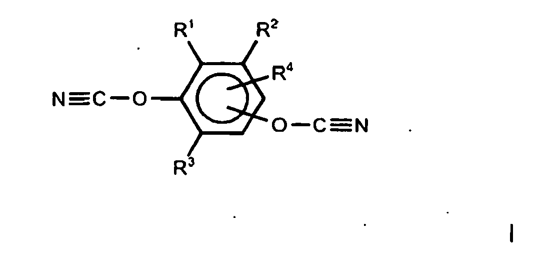 worin R¹ bis R⁴ unabhängig voneinander Wasserstoff, C₁-C₁₀-Alkyl, C₃-C₈-Cycloalkyl, C₁-C₁₀-Alkoxy, Halogen, Phenyl oder Phenoxy ist, wobei die Alkyloder Arylgruppen fluoriert oder teilfluoriert sein können, 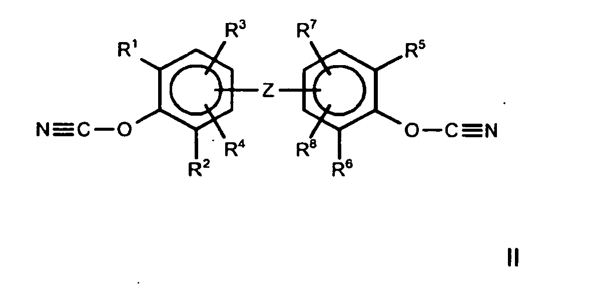 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁-C₁₀-Alkylen, O, NR⁹, N=N, CH=CH, COO, CH=N, CH=N-N=CH, Alkylenoxyalkylen mit C₁-C₈-Alkylen, S, Si(CH₃)₂, 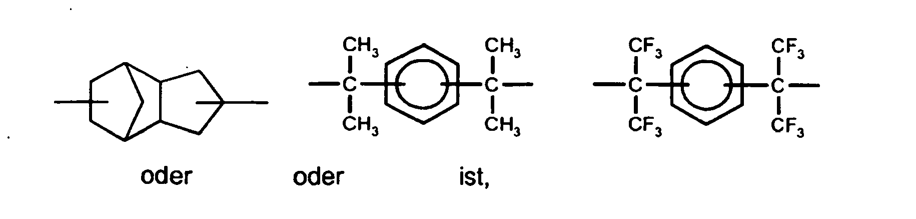 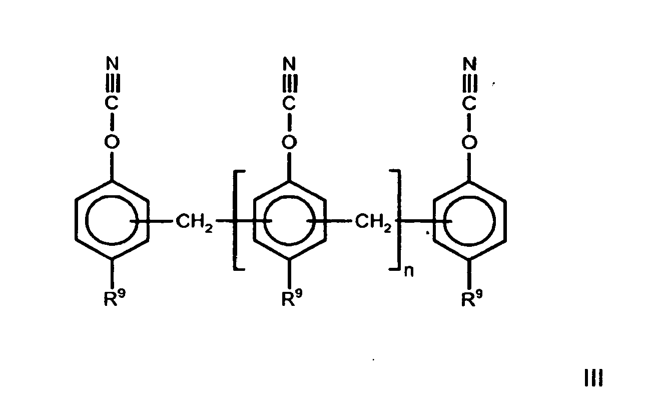 worin R⁹ Wasserstoff oder C₁-C₁₀-Alkyl ist und n einen Wert von 0 bis 20 darstellt,
sowie unter Prepolymeren der vorgenannten Cyanate.

15. Verfahren nach einem der Ansprüche 11 bis 14, worin (i) die Grundmischung gemäß (a) mindestens einen Füllstoff enthält oder worin nach Mischen der Komponenten gemäß (c) mindestens ein Füllstoff zugesetzt wird, oder worin (ii) die Grundmischung gemäß (a) mindestens einen weiteren Zusatz enthält oder worin nach Mischen der Komponenten gemäß (c) mindestens ein weiterer Zusatz zugemischt wird.

## Claims

1. Polycyanurate foam comprising the structural element A and either terminal amino groups and/or at least one of the following structural elements B, C, or D: 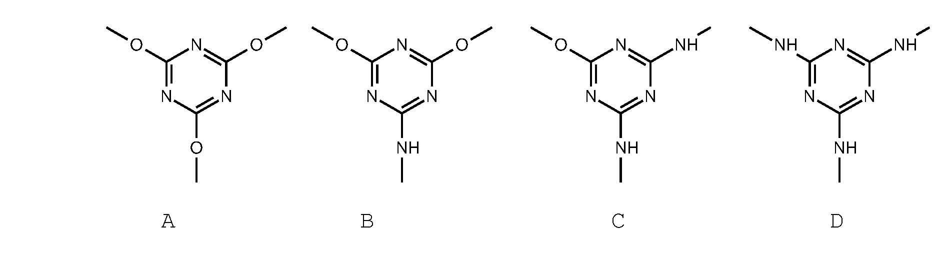 wherein the foam has closed pores that contain carbon dioxide.

2. Polycyanurate foam according to claim 1 further comprising the product of a water-or alcohol-releasing condensation reaction and/or a substance that is capable of physically bonding and releasing water and/or alcohol in the state after release of a portion of this water/alcohol or of the entire water/alcohol.

3. Polycyanurate foam according to claim 2 wherein the substance that is capable of physically bonding and releasing water and/or alcohol is at least one salt of one or several metal or metalloid cations preferably selected from bivalent and/or trivalent cations.

4. Polycyanurate foam according to claim 3, **characterized in that** the salt is a salt hydrate that has released at least a portion of its water molecules wherein the salt hydrate preferably was poorly water-soluble.

5. Polycyanurate foam according to claim 4, **characterized in that** the salt hydrate was used in the form of a powder that has been made hydrophobic.

6. Polycyanurate foam according to claim 2 wherein the product of a water- or alcohol-releasing condensation reaction is a siloxane or an organic ester.

7. Polycyanurate foam according to one of the preceding claims obtained by utilizing at least one bifunctional or polyfunctional organic cyanate selected from cyanates of formulae I to III: 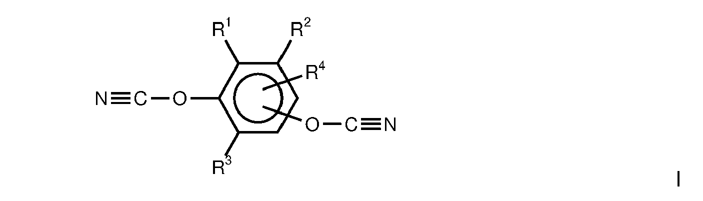 wherein R¹ to R⁴ independently from one another are hydrogen, C₁-C₁₀ alkyl, C₃-C₈ cycloalkyl, C₁-C₁₀ alkoxy, halogen, phenyl, or phenoxy wherein the alkyl groups or aryl groups can be fluorinated or partially fluorinated; 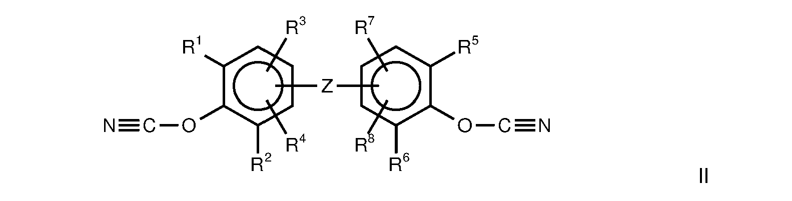 wherein R⁵ to R⁸ are the same as R¹ to R⁴ and Z is a chemical bond, SO₂, CF₂, CH₂, CHF, CH(CH₃), isopropylene, hexafluoroisopropylene, C₁-C₁₀ alkylene, O, NR⁹, N=N, CH=CH, COO, CH=N, CH=N-N=CH, alkylene oxyalkylene with C₁-C₈ alkylene, S, Si(CH₃)₂, 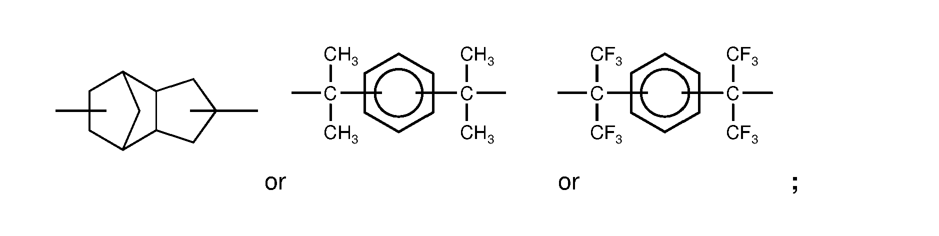 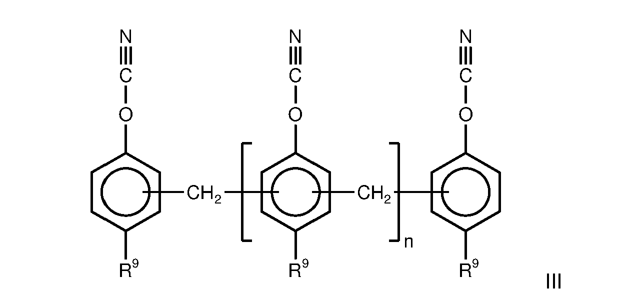 wherein R⁹ is hydrogen or C₁-C₁₀ alkyl and n is a value from 0 to 20,
as well as selected from prepolymers of the aforementioned cyanates.

8. Polycyanurate foam according to claim 7, **characterized in that**, in addition to said cyanate or cyanates of formulae (I) to (III), at least one monofunctional cyanate and/or one monophenol or diphenol and/or one glycid ether was used for its preparation.

9. Polycyanurate foam according to one of the preceding claims additionally comprising at least one filler.

10. Polycyanurate foam according to claim 9 wherein the filler or at least one of the fillers is selected from microfillers and/or nano fillers and/or fibers of inorganic, optionally organically modified, and/or coated material.

11. Method for producing a polycyanurate foam according to one of the preceding claims, **characterized by** the following steps:
a) providing a basic mixture comprising at least one polymerizable organic cyanate,
b) providing a substance that physically or chemically releases water or an alcohol,
c) mixing of the components specified under (a) and (b),
d) effecting the release of water or alcohol from the water or an alcohol releasing substance, and
e) effecting the polymerization of the at least one polymerizable organic cyanate.

12. Method according to claim 11, **characterized in that** the substance physically or chemically releasing water or an alcohol is incorporated in a solid state into the basic mixture according to (a) and **in that** effecting the release of water or alcohol as well as effecting the polymerization of the at least one polymerizable organic cyanate are initiated by heat, optionally supported by a further added catalyst, wherein the substance physically or chemically releasing water or an alcohol preferably is a salt hydrate that optionally has been made hydrophobic.

13. Method according to claim 11 or 12, **characterized in that** the substance physically or chemically releasing water or an alcohol is a condensable material which, in the course of its condensation, releases water or an alcohol, **in that** the basic mixture according to (a) is melted or dissolved in a low-boiling solvent, **in that** the substance physically or chemically releasing water or an alcohol is introduced into the melt or the solution of the basic mixture according to (a) and the release of water or alcohol therefrom and the polymerization of the at least one cyanate are effected simultaneously by adding one or several catalysts into the formed mixture, optionally with supply of heat, wherein the substance physically or chemically releasing water or an alcohol preferably is a silanol or a metal alkoxide or a metalloid alkoxide.

14. Method according to one of claims 11 to 13 wherein the at least one cyanate is selected from bifunctional or polyfunctional organic cyanates of formulae I to III: 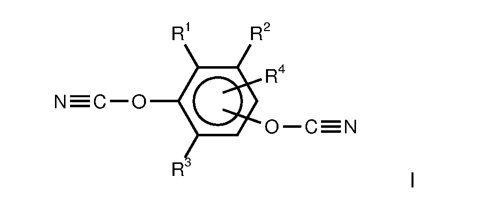 wherein R¹ to R⁴ independently from one another are hydrogen, C₁-C₁₀ alkyl, C₃-C₈ cycloalkyl, C₁-C₁₀ alkoxy, halogen, phenyl, or phenoxy wherein the alkyl groups or aryl groups can be fluorinated or partially fluorinated; 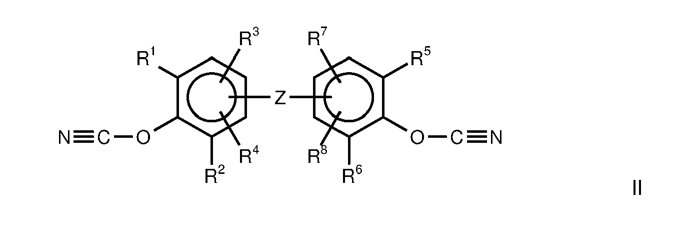 wherein R⁵ to R⁸ are the same as R¹ to R⁴ and Z is a chemical bond, SO₂, CF₂, CH₂, CHF, CH(CH₃), isopropylene, hexafluoroisopropylene, C₁-C₁₀ alkylene, O, NR⁹, N=N, CH=CH, COO, CH=N, CH=N-N=CH, alkylene oxyalkylene with C₁-C₈ alkylene, S, Si(CH₃)₂, 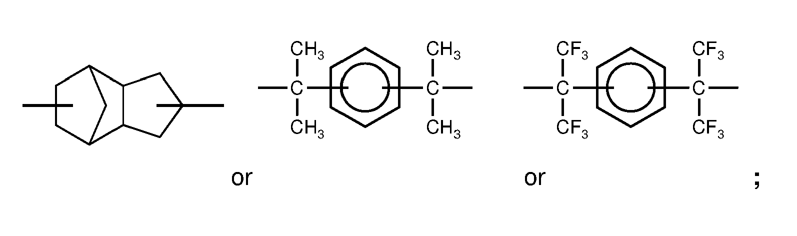 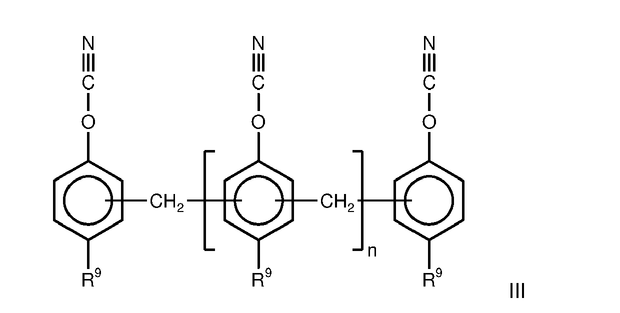 wherein R⁹ is hydrogen or C₁-C₁₀ alkyl and n is a value from 0 to 20,
as well as selected from prepolymers of the aforementioned cyanates.

15. Method according to one of claims 11 to 14 wherein (i) the basic mixture according to (a) contains at least one filler or wherein, after mixing the components according to (c), at least one filler is added or wherein (ii) the basic mixture according to (a) contains at least one further additive or wherein, after mixing the components according to (c), at least one further additive is admixed.

## Revendications

1. Mousse de polycyanurate, contenant l'élément structurel A et des groupes amino terminals, et/ou encore au moins un des éléments structurels B, C ou D : 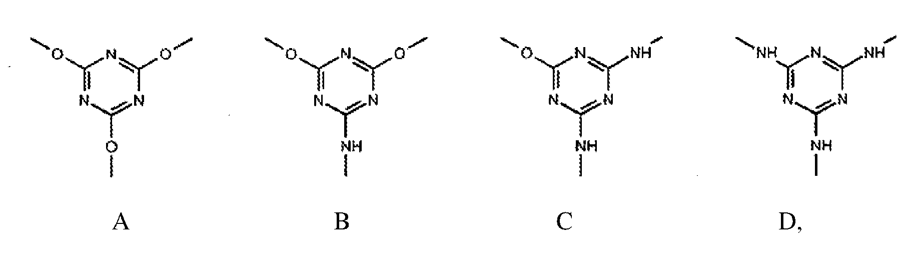 la mousse comportant des pores fermés qui contiennent du dioxyde de carbone.

2. Mousse de polycyanurate selon la revendication 1, contenant en outre le produit d'une réaction de condensation libérant de l'eau ou de l'alcool et/ou une substance qui est en mesure de lier physiquement et de restituer de l'eau et/ou de l'alcool, dans l'état après la restitution d'une partie ou de la totalité de cette eau/de cet alcool.

3. Mousse de polycyanurate selon la revendication 2, dans laquelle la substance qui est en mesure de lier physiquement et de restituer de l'eau et/ou de l'alcool est un sel d'un ou de plusieurs cations métalliques ou semi-métalliques, choisis de préférence parmi les cations bi-et/ou trivalents.

4. Mousse de polycyanurate selon la revendication 3, **caractérisée en ce que** le sel est un hydrate de sel qui a cédé au moins une partie de ses molécules d'eau, sachant que l'hydrate de sel était de préférence difficilement soluble dans l'eau.

5. Mousse de polycyanurate selon la revendication 4, **caractérisée en ce que** l'hydrate de sel a été mis en oeuvre sous la forme d'une poudre rendue hydrophobe.

6. Mousse de polycyanurate selon la revendication 2, dans laquelle le produit d'une réaction de condensation libérant de l'eau ou de l'alcool est un siloxane ou un ester organique.

7. Mousse de polycyanurate selon l'une quelconque des revendications précédentes, obtenu en utilisant au moins un cyanate organique bi- ou polyfonctionnel, choisi parmi les cyanates des formules I à III : 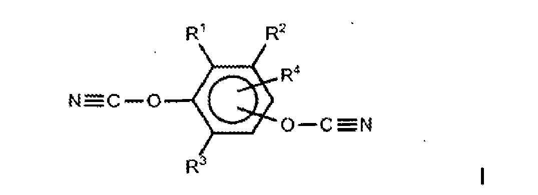 dans laquelle R¹ à R⁴, indépendamment les uns des autres, sont des hydrogènes, des alkyles en C₁ à C₁₀, des cycloalkyles en C₃ à C₈, des alcoxyles en C₁ à C₁₀, des halogènes, des phényles ou des phénoxyles, les groupes alkyles ou aryles pouvant être fluorés ou partiellement fluorés, 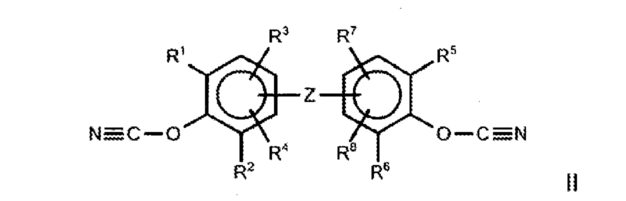 dans laquelle R⁵ à R⁸ sont comme R¹ à R⁴ et Z est une liaison chimique, un SO₂, un CF₂, un CH₂, un CHF, un CH(CH₃), un isopropylène, un hexafluoroisopropylène, un alkylène en C₁ à C₁₀, un O, un NR⁹, un N=N, un CH=CH, un COO, un CH=N, un CH=N-N=CH, un alkylènoxyalkylène avec des alkylènes en C₁ à C₈, un S, un Si(CH₃)₂, 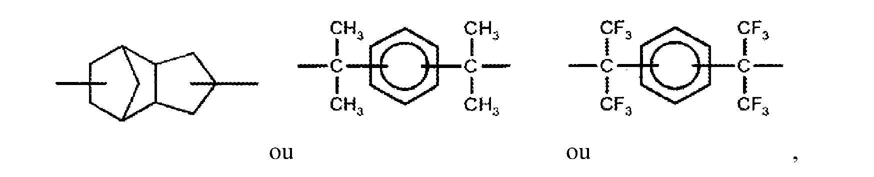 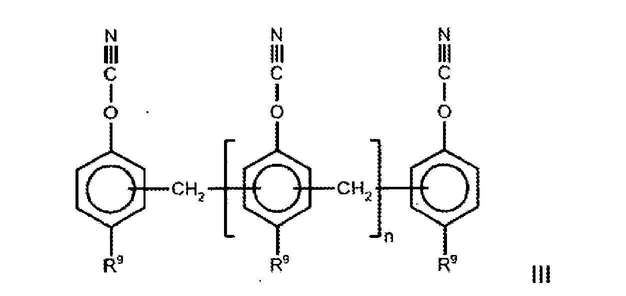 dans laquelle R⁹ représente un hydrogène ou un alkyle en C₁ à C₁₀ et n une valeur de 0 à 20,
ainsi que parmi des prépolymères des cyanates précités.

8. Mousse de polycyanurate selon la revendication 7, **caractérisée en ce qu'**à côté du ou des cyanates susmentionnés des formules (I) à (III), au moins un cyanate monofonctionnel et/ou un mono- ou diphénol et/ou un éther glycidique sont utilisés pour sa préparation.

9. Mousse de polycyanurate selon l'une quelconque des revendications précédentes, contenant en plus au moins une charge.

10. Mousse de polycyanurate selon la revendication 9, dans laquelle la charge ou l'une au moins des charges est choisie parmi les microcharges et/ou les nanocharges et/ou les fibres de matériau inorganique, le cas échéant organique modifié et/ou revêtu.

11. Procédé de préparation d'une mousse de polycyanurate selon l'une quelconque des revendications précédentes, **caractérisé par** les étapes suivantes :
a) mise à disposition d'un mélange de base contenant au moins un cyanate organique polymérisable,
b) mise à disposition d'une substance dégageant de l'eau ou un alcool par voie physique ou chimique,
c) mélangeage des composants cités sous (a) et (b),
d) déclenchement de la libération d'eau ou d'alcool à partir de la substance dégageant de l'eau ou un alcool, et
e) déclenchement de la polymérisation dudit au moins un cyanate organique polymérisable.

12. Procédé selon la revendication 11, **caractérisé en ce que** la substance dégageant de l'eau ou un alcool par voie physique ou chimique est incorporée à l'état solide dans le mélange de base selon (a) et **en ce que** le déclenchement de la libération de l'eau ou de l'alcool ainsi que le déclenchement de la polymérisation dudit au moins un cyanate organique polymérisable est initialisé par de la chaleur, assistée le cas échéant par un catalyseur ajouté en outre, la substance dégageant de l'eau ou un alcool par voie physique ou chimique étant de préférence un hydrate de sel, rendu hydrophobe le cas échéant.

13. Procédé selon la revendication 11 ou 12, **caractérisé en ce que** la substance dégageant de l'eau ou un alcool par voie physique ou chimique est un matériau condensable qui, lors de sa condensation, dégage de l'eau ou un alcool, **en ce que** le mélange de base selon (a) est fondu ou dissous dans un solvant à bas point d'ébullition, **en ce que** la substance dégageant de l'eau ou un alcool par voie physique ou chimique est introduite dans la matière fondue ou dans la solution du mélange de base selon (a) et **en ce que** le dégagement d'eau ou d'alcool qui en provient et la polymérisation dudit au moins un cyanate sont provoqués en même temps par d'adjonction d'un ou de plusieurs catalyseurs dans le mélange formé, le cas échéant moyennant l'introduction de chaleur, la substance dégageant de l'eau ou un alcool par voie physique ou chimique étant de préférence un silanol ou un alcoxyde d'un métal ou d'un semi-métal.

14. Procédé selon l'une quelconque des revendications 11 à 13, dans lequel ledit au moins un cyanate est choisi parmi les cyanates organiques bi- ou polyfonctionnels des formules I à III : 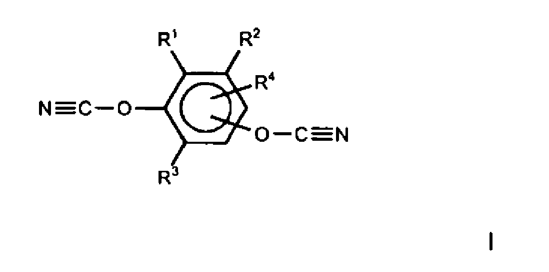 dans laquelle R¹ à R⁴, indépendamment les uns des autres, sont des hydrogènes, des alkyles en C₁ à C₁₀, des cycloalkyles en C₃ à C₈, des alcoxyles en C₁ à C₁₀, des halogènes, des phényles ou des phénoxyles, les groupes alkyles ou aryles pouvant être fluorés ou partiellement fluorés, 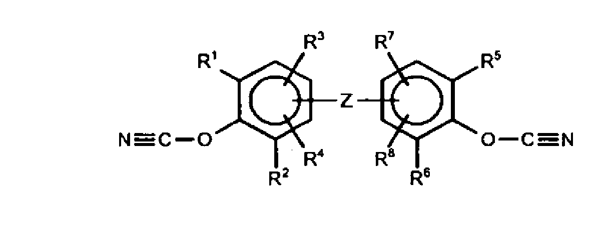 dans laquelle R⁵ à R⁸ sont comme R¹ à R⁴ et Z est une liaison chimique, un SO₂, un CF₂, un CH₂, un CHF, un CH(CH₃), un isopropylène, un hexafluoroisopropylène, un alkylène en C₁ à C₁₀, un O, un NR⁹, un N=N, un CH=CH, un COO, un CH=N, un CH=N-N=CH, un alkylènoxyalkylène avec des alkylène en C₁ à C₈, un S, un Si(CH₃)₂, 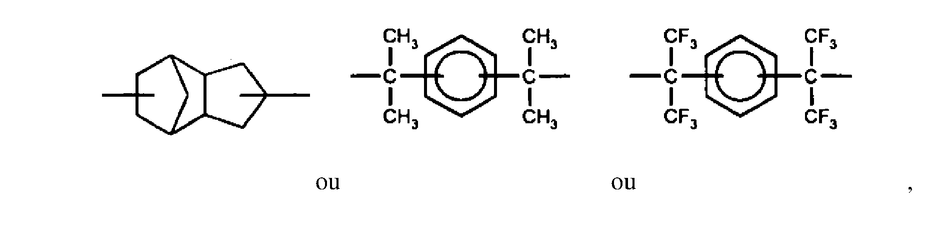 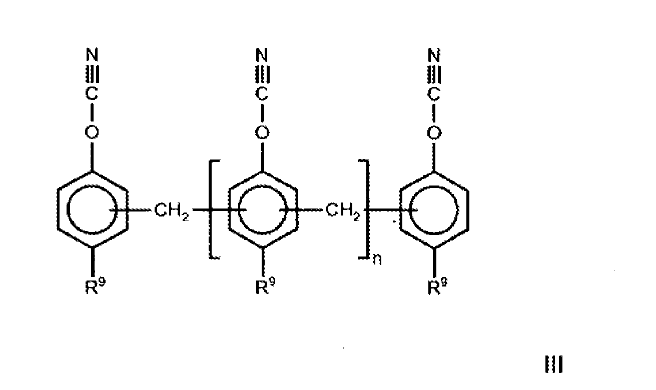 dans laquelle R⁹ représente un hydrogène ou un alkyle en C₁ à C₁₀ et n une valeur de 0 à 20,
ainsi que parmi des prépolymères des cyanates précités.

15. Procédé selon l'une quelconque des revendications 11 à 14, dans lequel (i) le mélange de base selon (a) contient au moins une charge ou dans lequel, après mélangeage des composants selon (c), au moins une charge est ajoutée, ou dans lequel (ii) le mélange selon (a) contient au moins un additif supplémentaire ou dans lequel, après le mélangeage des composants selon (c), au moins un autre additif est incorporé au mélange.
